# EUROPEAN PATENT APPLICATION

(11) **EP 3 587 775 A1**
(43) Date of publication of application: **01.01.2020**
(21) Application number: 19182703.9
(22) Date of filing: 26.06.2019
(51) Int. Cl.: F02D 9/10, H05K 9/00, G01D 5/14, F16K 37/00, F16K 1/22

(54) **ACTUATOR PROVIDED WITH AN ELECTROMAGNETIC FIELD SCREENING DEVICE FOR MAGNETIC OR MAGNETO-RESISTIVE POSITION SENSORS**

(30) Priority: 29.06.2018 IT 201800006825
(71) Applicant: Magneti Marelli S.p.A., 20011 Corbetta (MI) (IT)
(72) Inventor: MUSOLESI, Stefano, I-20011 Corbetta, MILANO (IT); PICIOTTI, Roberto, I-20011 Corbetta, MILANO (IT); DE SANGRO, Silvia, I-20011 Corbetta, MILANO (IT); LO RITO, Gianfranco, I-20011 Corbetta, MILANO (IT)
(74) Representative: Mitola, Marco

(57) **Abstract**

An actuator (4) comprising a main body (8) which delimits a kinematic chamber (12) inside which a valve (16) and/or a relative drive mechanism (20) of the valve (16) is at least partially housed, a closing lid (24) that can be associated to close the kinematic chamber (12) of the main body (8), wherein the throttle body (4) contains a position sensor (28), of the magnetic or magnetoresistive type, facing a slider (30) of the valve (16) and/or a component of said drive mechanism (20) so as to read the position of said slider (30) and therefore of the relative valve (16) and/or of the relative component of the drive mechanism (20). Advantageously, the closing lid (24) is provided with a screening device (36) of electromagnetic fields for the position sensor (28) and the slider (30), positioned near the position sensor (28), on the side opposite the kinematic chamber (12) with respect to the position sensor (28).

## Description

### FIELD OF APPLICATION

The present invention relates to a throttle body provided with an electromagnetic field screening device for magnetic or magneto-resistive position sensors.

### STATE OF THE ART

As is well known, various actuators are used in the automotive sector, such as throttle bodies fitted with valves, for example butterfly or guillotine valves, to change the through lumen of the engine supply ducts, mushroom valves, to change the through lumen of the exhaust gases, exhaust gas recirculation (EGR) valves, and so on.

In all possible applications, the engine control system must know the actual position of the controlled valve, in order to make all the relevant corrections as requested by the user.

For this purpose, throttle bodies are equipped with magnetic or magneto-resistive position sensors in the vicinity of the valve to be monitored or a respective control element thereof, such as a transmission or a gear wheel, integral with the valve itself.

Such sensors, in a known manner, detect the change in the magnetic flux of magnets; they are therefore suitable for detecting the speed of rotation of gear wheels or the translation of respective components.

The above sensors, however precise, are very sensitive to electromagnetic disturbances from external sources.

These electromagnetic disturbances can in fact generate significant reading errors by the sensors, which generate irregular operations of the user equipment or its auxiliary devices, since the various actuators, due to inaccurate readings, are unable to implement the correct control strategies.

### PRESENTATION OF THE INVENTION

The need is therefore felt to resolve the drawbacks and limitations mentioned with reference to the prior art.

The need is thus felt to provide an actuator with a magnetic or magneto-resistive position sensor which is effectively screened from external electromagnetic fields, in an effective and reliable manner, without thereby significantly increasing the overall costs of construction and assembly.

Such requirement is met by an actuator equipped with an electromagnetic field screening device for magnetic or magneto-resistive position sensors according to claim 1.

### DESCRIPTION OF THE DRAWINGS

Further characteristics and advantages of the present invention will be more clearly comprehensible from the description given below of its preferred and non-limiting embodiments, wherein:

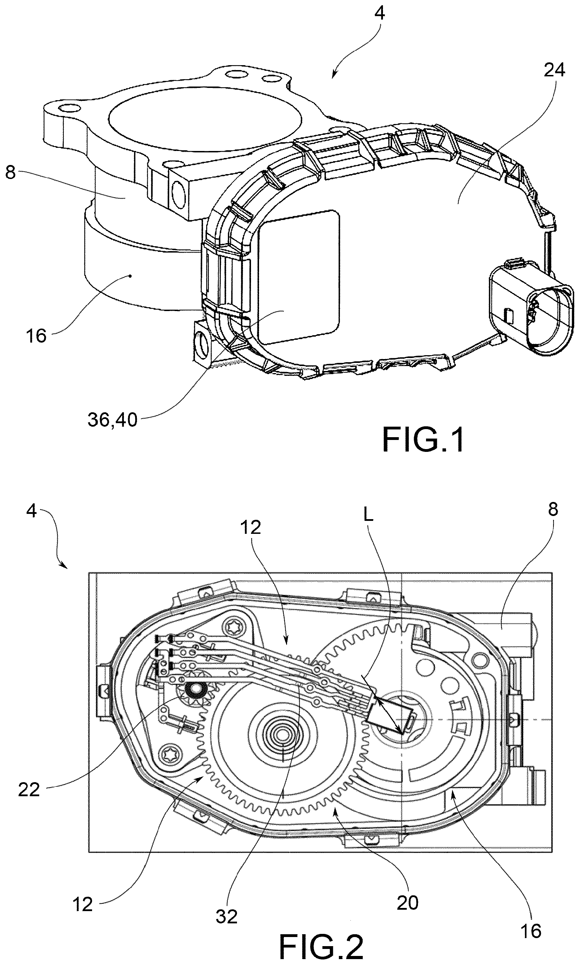

- figure 1 is a perspective view of an actuator according to the present invention;

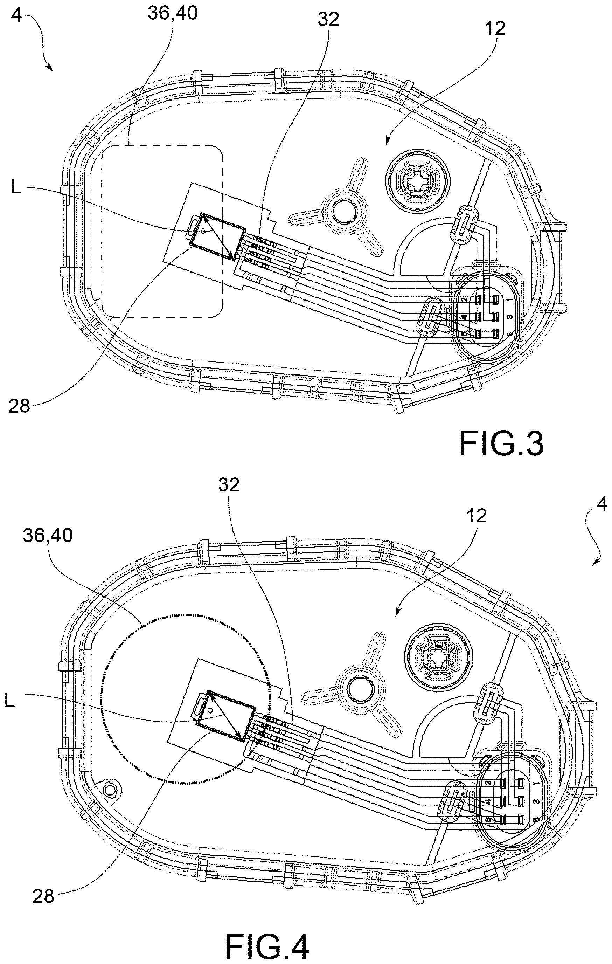

- figures 2-4 show views from the side of the actuator closing lid, of possible embodiments according to the present invention, wherein the closing lid is transparent;
- figure 5 is a perspective view of a closing lid of an actuator according to the present invention;
   figure 6 shows a cross-section view of a closing lid according to a further embodiment of the present invention;
- figure 7a is a cross-section view, in an assembled configuration, of a closing lid according to a possible embodiment variant of the present invention;
- figure 7b shows a partial perspective view of the closing lid of figure 7a, in a configuration in separate parts;
- figure 8a shows a cross-section view, in an assembled configuration, of a closing lid according to a further embodiment of the present invention;
- figure 8b depicts a partial perspective view of the closing lid in figure 7a, in a configuration in separate parts.

The elements or parts of elements common to the embodiments described below will be indicated using the same reference numerals.

### DETAILED DESCRIPTION

With reference to the aforementioned figures, reference numeral 4 globally denotes an overall schematic view of an actuator.

It should be noted that the term actuator must be considered broadly, including any type of actuator device, such as a throttle body, a valve body, a switching device, a diverter, an EGR type valve and the like.

The actuator 4 comprises a main body 8 which delimits a kinematic chamber 12 inside which a valve 16 and/or a relative drive mechanism 20 of the valve 16 is at least partially housed.

The drive mechanism is in turn connected to motor means 22, typically electric motors; the motor means 22 may provide both a translational and rotational drive.

A closing lid 24 can be associated to close the kinematic chamber 12 of the main body 8.

For the purposes of the scope of protection of the present invention, the type of valve 16 which may include a butterfly valve, guillotine valve, mushroom valve, for various applications such as throttle bodies of engine supply systems, throttle bodies of EGR valves and the like is irrelevant.

The drive mechanism 20 may comprise, preferably but not exclusively, a cascade of gears, sprockets, belts, pulleys, chains, levers, and the like. The valve 16, thanks to said drive mechanism 20, may have a translational, rotary or roto-traslatory motion.

The actuator 4 contains a position sensor 28, of the magnetic or magneto-resistive type, facing a slider 30 of the valve 16 and/or of a component of said drive mechanism 20 so as to read the position of said slider 30 and therefore of the relative valve 16 and/or of the relative component of the drive mechanism 20. Typically, the slider 30 of the valve 16 and/or the drive mechanism component 20 is a magnet which constitutes the sensible element or magnet whose position is detected by the position sensor 28.

It should be noted that the term 'slider' should not be considered in restrictive or limiting terms, namely, it should not be limited to an object that performs a specific movement such as translatory and/or rotational. 'Slider' means any object integral with the valve 16 and/or relative drive mechanism component 20, regardless of the specific type of movement it performs.

In particular, the position sensor 28, in a known manner, detects the change in the magnetic flux of magnets; therefore said position sensor 28 faces a portion of the valve 16 or a component of the drive kinematics 20 made of ferromagnetic material.

The position sensor 28 is in turn electrically connected to power supply means (not illustrated) by means of suitable electrical connections 32.

According to one embodiment, the position sensor 28 is fixed to the closing lid 24.

It is also possible to fix the position sensor 28 inside the main body 8, for example by means of suitable brackets (not shown).

The assembly comprising the position sensor 28, of a magnetic or magneto-resistive type, and the slider 30 must be screened, i.e. as immune as possible to external electro-magnetic disturbances.

To such purpose, advantageously, the closing lid 24 is provided with a screening device 36 of electromagnetic fields for the position sensor 28 and for the slider 30, positioned near the position sensor 28, on the side opposite the kinematic chamber 12 with respect to said position sensor.

In this way, the screening device 36 is positioned outward of the position sensor 28 so as to screen the assembly comprising the position sensor 28 and the slider 30 from electromagnetic fields coming from the outside.

In particular, having taken a magneto-resistive position sensor 28 having a prevailing flat extension along a prevailing extension plane P, it is appropriate for the screening device 36 to be able to screen the electromagnetic fields coming from and propagating in directions tangent to said prevailing extension plane P.

According to a possible embodiment, the screening device 36 comprises a screening plate 40 secured to the closing lid 24.

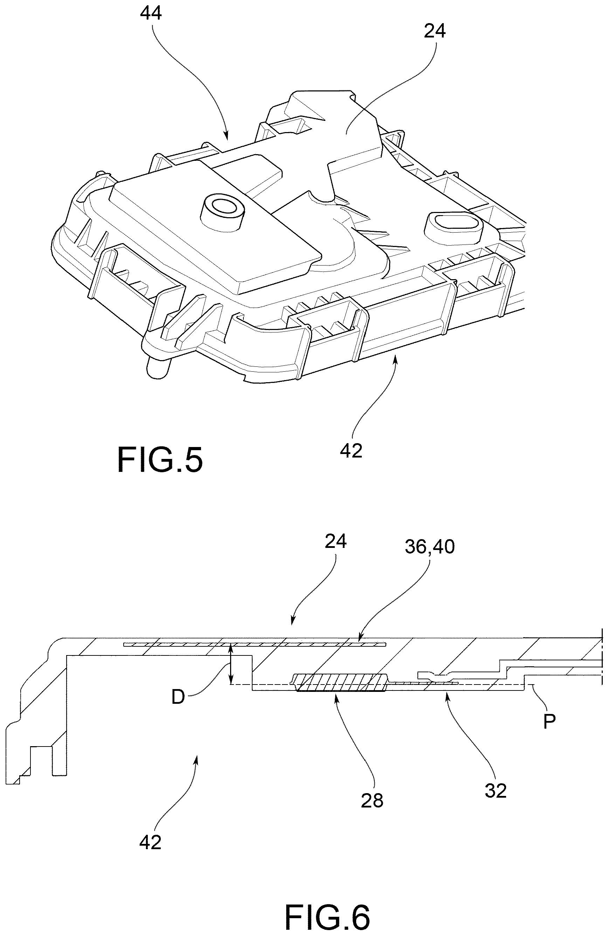

The plate 40 may be applied and attached to the closing lid 24 in various ways: for example, the plate 40 is at least partially embedded inside the closing lid 24 (figure 6). In other words, the plate 40 may be at least partially or completely embedded inside a wall or thickness of the closing lid 24.

According to further possible embodiments, the plate 40 is fixed to the closing lid 24 by gluing, riveting and the like.

Preferably, the plate 40 is fixed to the closing lid 24 by means of fixing means arranged in a perimetral position, i.e. on a perimeter or outer edge of said plate 40. In fact, in this position, the fastening means do not disturb, or disturb as little as possible, the screening function performed by said plate 40.

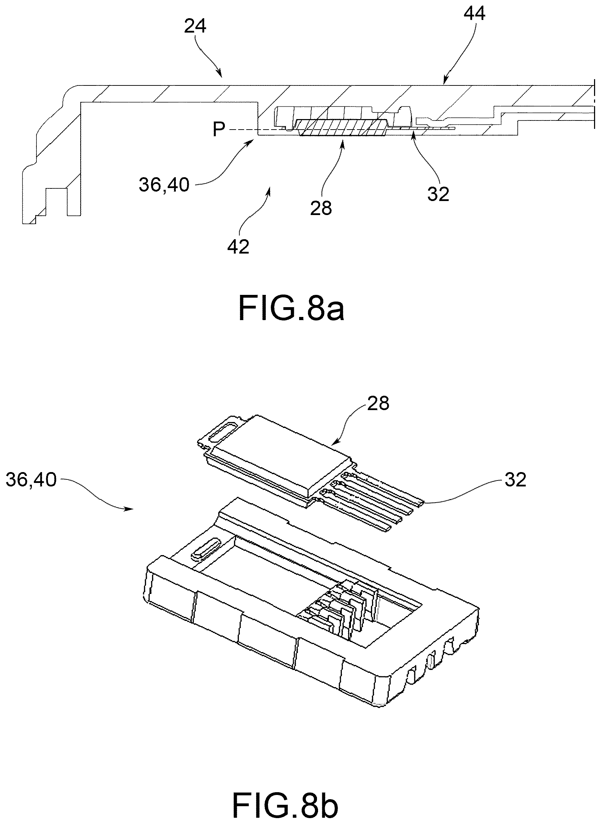

The application of the plate 40 to the closing lid 24 preferably takes place from both an inner side 42 of the closing lid 24 facing the kinematic chamber 12 (figure 8) and opposite to an outer side 44 of the closing lid 24 opposite the kinematic chamber 12 (figure 8) .

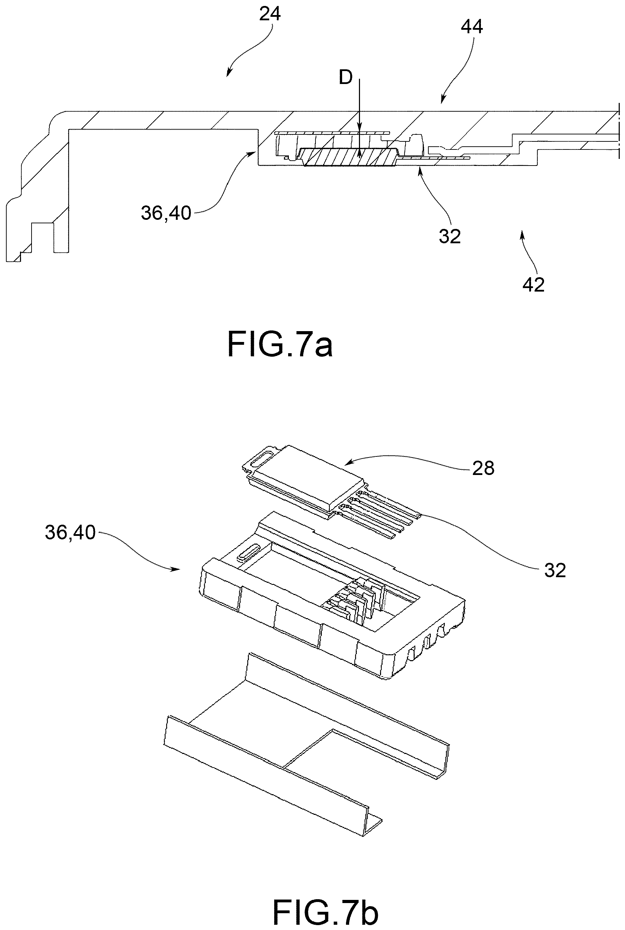

According to a possible embodiment (figure 7), the screening device 36 is a plate 40 having an axially symmetrical shape, preferably circular. It is also possible to provide non-axial symmetrical geometries that favor such extensions / orientations of the plate and therefore corresponding preferential shields along the lines of major extensions, depending on the requirements of the applications required.

According to a possible embodiment (figure 7), the plate 40 performs a support function of the position sensor 28 so as to be substantially in contact with said position sensor. For example, the plate 40 may be used, during the moulding of the closing lid 24, to protect the position sensor 28 from the molten plastic flow and, following the moulding, in order to realise a support and a protection or to screen the position sensor 28 from the electromagnetic fields coming from the outside of the throttle body 4. Thanks to the fact that the plate 40 is made of ferromagnetic and thermally conductive material and is connected to the suitably refrigerated body 8, it is also possible, thanks to the plate, to remove thermal energy from the position sensor 28.

Preferably, the plate has a high magnetic saturation and permeability, so as to ensure greater screening effectiveness from external disturbances.

Preferably, the plate 40 is positioned as close as possible to the position sensor 28: in other words, the distance D between the plate 40 and the position sensor 28 must be as small as possible.

According to one embodiment, the plate 40 covers an area greater than or equal to the area covered by the sensible element or magnet 30.

According to one embodiment, the area of the plate 40 is directly proportional to the distance D between said plate 40 and the position sensor 28.

This way, increasing the distance between the plate 40 and the position sensor 28 also increases the width of the plate 40 itself, so as to avoid the possibility that electromagnetic waves from outside may creep into this gap and affect the reading of the position sensor 28.

Preferably, the plate 40 is arranged in a coaxial position with respect to the magnetization center of the magnet which, as seen, partially constitutes the slider 30 of the valve 16 and / or of the drive mechanism 20.

Preferably, the width or area of the plate 40 is greater than or equal to the area occupied by the magnet 30.

In order to ensure a good screening capacity, the plate 40 may be made of a ferromagnetic alloy.

Preferably, the plate 40 has a thickness greater than or equal to 0.25 mm.

As may be appreciated from the description, the present invention makes it possible to overcome the drawbacks of the prior art.

In fact, the throttle body is screened from external electromagnetic fields so that the magnetic or magneto-resistive sensors are always able to provide a correct reading of the position of the corresponding valve.

The solution of the present invention is also economical to make and assemble.

In fact, it is possible to apply the screening device by gluing, welding, riveting or embedding during the moulding of the closing lid itself.

In addition, the screening device is extremely small in size, mass and cost compared to the entire throttle body.

In addition, the solution of the present invention may also be applied to pre-existing actuators, i.e. as retrofitting, for example by replacing the original main body lids with new lids equipped with an applied or incorporated screening device.

Moreover, thanks to the fact that the plate is made of ferromagnetic material and is connected to the body 8, it is possible to remove thermal energy from the position sensor, improving its operation and duration.

A person skilled in the art may make numerous modifications and variations to the solutions described above so as to satisfy contingent and specific requirements while remaining within the sphere of protection of the invention as defined by the following claims.

## Claims

1. Actuator (4) comprising
- a main body (8) which delimits a kinematic chamber (12) inside which a valve (16) and / or a relative drive mechanism (20) of the valve (16) is at least partially housed,
- a closing lid (24) that can be associated to close the kinematic chamber (12) of the main body (8),
- in which the throttle body (4) contains a position sensor (28), of the magnetic or magneto-resistive type, facing a slider (30) of the valve (16) and / or of a component of said drive mechanism (20) so as to read the position of said slider (30) and therefore of the relative valve (16) and / or of the relative component of the drive mechanism (20),
- wherein the closing lid (24) is provided with a screening device (36) of electromagnetic fields for the position sensor (28) and the slider (30), positioned near the position sensor (28), on the side opposite the kinematic chamber (12) with respect to the position sensor (28),
wherein the screening device (36) comprises a screening plate (40) fixed to the closing lid (24),
wherein the plate (40) is at least partially embedded within the closing lid (24).

2. Actuator (4) according to claim 1, wherein the position sensor (28) is fixed to the closing lid (24).

3. Actuator (4) according to any one of the claims from 1 to 2, in which the plate (40) performs a support function of the position sensor (28) so as to be substantially in contact with the position sensor (28).

4. Actuator (4) according to claim 3, wherein the plate (40) is made of ferromagnetic and thermally conductive material and is connected to the body (8) so as to remove thermal energy from the position sensor (28).

5. Actuator (4) according to any one of the claims from 1 to 4, wherein said plate (40) comprises glass fibres screening external electromagnetic fields.

6. Actuator (4) according to any one of the claims from 1 to 5, wherein the plate (40) covers an area greater than or equal to the area of the slider or sensitive element (30).

7. Actuator (4) according to any one of claims 1 to 6, wherein the plate (40) is arranged coaxially to a magnetization center of the slider (30) which comprises a magnet.

8. Actuator (4) according to any one of the claims from 1 to 7, wherein the plate (40) is made of metallic material.

9. Actuator (4) according to any one of the claims from 1 to 8, wherein the plate (40) has a thickness greater than or equal to 0.25 mm.

10. Actuator (4) according to any one of the claims from 1 to 9, wherein the plate (40) is fixed to the closing lid (24) by means of fixing means arranged in a perimetral position, i.e. on a perimeter or outer edge of said plate (40).
